# EUROPEAN PATENT APPLICATION

(11) **EP 1 811 730 A1**
(43) Date of publication of application: **25.07.2007**
(21) Application number: 07100759.5
(22) Date of filing: 18.01.2007
(51) Int. Cl.: H04L 12/56

(54) **Apparatus and Method for Transmitting / Receiving Signal in a Communication System**

(30) Priority: 18.01.2006 KR 20060005507
(71) Applicant: Samsung Electronics Co., Ltd., Suwon-si, Gyeonggi-Do (KR)
(72) Inventor: Hyon, Tae-In c/o Samsung ElectronicsCo.,Ltd., Suwon-si, Gyeonggi-do (KR); Sung, Dan-Keun, Gyeonggi-do (KR); Hong, Young-Jun, Gyeonggi-do (KR); Cho, Sung-Soo, Gyeonggi-do (KR); Jung, Bang-Chul c/o Samsung ElectronicsCo.,Ltd.,, Suwon-si Gyeonggi-do (KR)
(74) Representative: Grünecker, Kinkeldey, Stockmair & Schwanhäusser Anwaltssozietät

(57) **Abstract**

A signal transmission/transmission apparatus and method in a communication system are provided, in which a BS groups MSs serviced by the BS into MS groups and allocates a downlink dedicated channel and an uplink dedicated channel to each of the MS groups.

## Description

### BACKGROUND OF THE INVENTION

### 1. Field of the Invention

The present invention generally relates to an apparatus and method for transmitting/receiving a signal in a communication system, and in particular, to an apparatus and method for transmitting/receiving a dedicated channel signal on a Mobile Station (MS) group basis.

### 2. Description of the Related Art

A future-generation communication system has evolved to take the form of a packet service communication system. The packet service communication system sends packet data bursts to a plurality of MSs and is designed to be suitable for high-speed transmission of a large volume of data. For this purpose, the future-generation communication system is under development to ensure mobility and Quality of Service (QoS) to Broadband Wireless Access (BWA) communication systems such as Wireless Local Area Network (WLAN) and Wireless Metropolitan Area Network (WMAN) systems. A major example of such communication systems is an Institute of Electrical and Electronics Engineers (IEEE) 802.16e communication system.

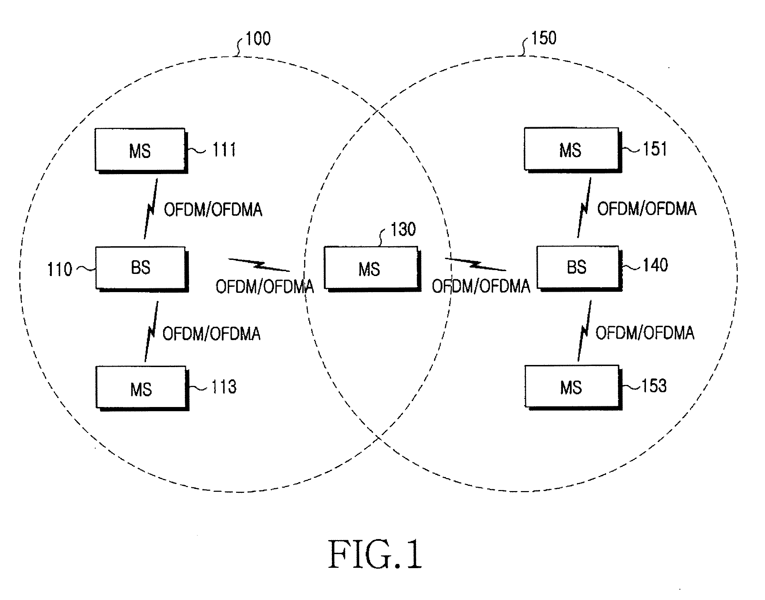

The IEEE 802.16e communication system adopts an Orthogonal Frequency Division Multiplexing/Orthogonal Frequency Division Multiple Access (OFDM/OFDMA) scheme for the physical channels of the WMAN system in order to support broadband transmission. With reference to FIG. 1, the configuration of the typical IEEE 802.16e communication system will be described.

Referring to FIG. 1, the IEEE 802.16e communication system is configured in a multi-cell structure. Thus, it includes cells 100 and 150, a Base Station (BS) 110 that covers the cell 100, a BS 140 that covers the cell 150, and a plurality of MSs 111, 113, 130, 151 and 153. Signaling between the BSs 110 and 140 and the MSs 111, 113, 130, 151 and 153 is based on OFDM/OFDMA.

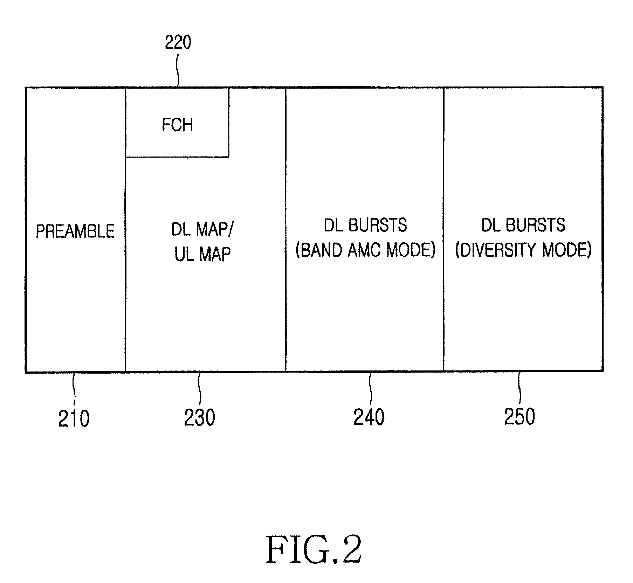

With reference to FIG. 2, a DownLink (DL) frame structure for the typical IEEE 802.16e communication system will be described.

FIG. 2 illustrates the structure of a DL frame in the typical BWA communication system.

Referring to FIG. 2, the DL frame starts with a preamble 210 followed by a Frame Control Header (FCH) 220, a DL MAP/Uplink (UL) MAP 230, DL bursts 240 of an Adaptive Modulation and Coding (AMC) mode, and DL bursts 250 of a diversity mode.

The preamble 210 is delivered for synchronization acquisition between a transmitter (e.g. BS) and receivers (e.g. MSs) and BS identification. The FCH 220 provides information about a modulation scheme used for the DL MAP/UL MAP 230 and the length of the DL MAP/UL MAP 230. The FCH 220 is of a fixed length, for example, 24 bits and uses a predetermined Modulation and Coding Scheme (MCS) level, for example, a Quadrature Phase Shift Keying (QPSK) 1/16 level.

The DL MAP/UL MAP 230 is configured with information about MSs. It indicates the presence or absence of DL bursts and UL bursts for MSs and, in the presence of DL bursts and UL bursts, describes the positions and modulation schemes of the DL bursts and the UL bursts. Since all MSs should listen to the DL MAP/UL MAP 230, the DL MAP/UL MAP 230 is modulated and coded at the most robust available MCS level.

The DL bursts 240 are allocated in a band AMC mode. In the band AMC mode, the total frequency band of the IEEE 802.16e communication system is divided into a plurality of subbands (i.e. bands) and one band AMC subchannel is formed with at least one subcarrier from each of the bands. The subcarriers of the band AMC subchannel are successive. A band AMC subchannel can be allocated by selecting optimum subcarriers according to the channel status of an MS.

The DL bursts 250 are allocated in a diversity mode. In the diversity mode, a diversity subchannel is formed with one or more subcarriers selected from among the total subcarriers of the IEEE 802.16e communication system, distributed across the total frequency band. The diversity mode brings a frequency diversity gain and the diversity subchannel is formed by mapping the indexes of the total subcarriers according to a predetermined frequency hopping pattern or spreading sequence.

Along with various users' demands for services, the IEEE 802.16e communication system also provides diverse services. Thus it follows that an increasing number of MSs want to receive the diverse services and the overhead of the DL MAP/UL MAP configured for the MSs leads to DL resource dissipation. As a result, the efficiency of DL resources decreases, thereby degrading the total system performance of the IEEE 802.16e communication system.

### SUMMARY OF THE INVENTION

The present invention is provided to address at least the problems and/or disadvantages and to provide at least the advantages described below. Accordingly, an object of the present invention is to provide an apparatus and method for transmitting/receiving a signal in a communication system.

Moreover, an object the present invention is to provide an apparatus and method for transmitting/receiving a dedicated channel signal on an MS group basis in a communication system.

Another object of the present invention is to provide an apparatus and method for transmitting/receiving a dedicated channel signal on an MS group basis in the manner that minimizes overhead from DL MAP and UL MAP messages in a communication system.

In accordance with an aspect of the present invention, there is provided a signal transmission method of a BS in a communication system, in which MSs serviced by the BS are grouped into MS groups, and a DL dedicated channel and a UL dedicated channel are allocated to each of the MS groups.

In accordance with another aspect of the present invention, there is provided a signal reception method of an MS in a communication station, in which first information about an MS group to which the MS belongs and DL and UL dedicated channels allocated to the MS group is received, a signal is received from the BS, and second information indicating whether the DL and UL dedicated channels are available to the MS is detected from the received signal.

In accordance with a further aspect of the present invention, there is provided a BS for transmitting a signal in a communication system, in which a controller groups MSs serviced by the BS into MS groups and determining DL and UL dedicated channels to be allocated to each of the MS groups, and a channel allocator allocates the DL and UL dedicated channels under the control of the controller.

In accordance with yet another of the present invention, there is provided an MS for receiving a signal in a communication system, in which a receiver receives a signal from a BS and detects first information about an MS group to which the MS belongs and DL and UL dedicated channels allocated to the MS group, a detector detects second information indicating whether the DL and UL dedicated channels are available to the MS from the received signal under a predetermined control, and a channel detector detects DL and UL dedicated channel signal from the DL and UL dedicated channels under a predetermined control.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 illustrates the configuration of a typical IEEE 802.16e communication system;
FIG. 2 illustrates a DL frame structure for the typical IEEE 802.16e communication system;
FIG. 3 illustrates a DL frame structure for an IEEE 802.16e communication system according to the present invention;
FIG. 4 is a flowchart illustrating a signal transmission operation of a BS in the IEEE 802.16e communication system according to the present invention;
FIG. 5 is a flowchart illustrating a signal reception operation of a group MS in the IEEE 802.16e communication system according to the present invention;
FIG. 6 is a block diagram of the BS in the IEEE 802.16e communication system according to the present invention; and
FIG. 7 is a block diagram of the MS in the IEEE 802.16e communication system according to the present invention.

### DETAILED DESCRIPTION OF PREFERRED EMBODIMENTS

The following detailed construction and elements are provided to assist in a comprehensive understanding of preferred embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention provides an apparatus and method for transmitting/receiving a dedicated channel signal on a Mobile Station(MS) group basis in a communication system. The present invention also provides an apparatus and method for transmitting/receiving a dedicated channel signal on an MS group basis so as to minimize the overhead of DownLink (DL) MAP and UpLink (UL) MAP messages in a communication system. For better understanding of the present invention, the present invention will be described in the context of an Institute of Electrical and Electronics Engineers (IEEE) 802.16e communication system, to which the present invention is not limited. Thus, the transmitting/receiving apparatus and method of the present invention is also applicable to other communication systems. The term "channel" used herein means a subchannel in the IEEE 802.16e communication system.

At present, the IEEE 802.16e communication system configures DL MAP and UL MAP messages for MSs. Since all MSs listen to the DL MAP and UL MAP messages, the DL MAP and UL MAP messages are transmitted at the most robust available Modulation and Coding Scheme (MCS) level in the IEEE 802.16e communication system. The DL MAP and UL MAP transmission causes extensive overhead on the downlink, using a large amount of resources. The resulting decrease of DL resource efficiency leads to degradation of the performance of the whole IEEE 802.16e communication system.

Accordingly, the present invention provides a method of transmitting and receiving a dedicated channel signal on an MS group in a manner that minimizes the overhead of DL MAP and UL MAP messages and thus increases resource efficiency. An operation for grouping signal reception apparatuses, such as MSs, in a signal transmission apparatus such as a Base Station(BS) in the IEEE 802.16e communication system, will be described below.

First, the BS can group MSs within its coverage area, taking into account the Quality of Service (QoS) levels of services that the MSs receive.

A variety of services are provided in the IEEE 802.16e communication system. The MSs can be grouped on a service basis. The reason for classifying MSs receiving the same service in the same group is to ensure that the MSs have the same QoS.

Second, the BS can group MSs within its coverage area according to the data characteristics of services that the MSs receive.

Among the services provided in the IEEE 802.16e communication system, Voice over Internet Protocol (VoIP) is characterized by bursty generation of a relatively small amount of data. MSs receiving services in which small-size data is sent at one time and thus needs to be multiplexed in one frame can be grouped into the same MS group.

Third, the BS can group MSs within its coverage area, considering the velocities of the MSs.

It is difficult to allocate band Adaptive Modulation and Coding (AMC) subchannels to MSs which move fast and thus are placed in a fast varying channel status in time and frequency domains. In the band AMC mode, the total frequency band of the IEEE 802.16e communication system is divided into a plurality of subbands (i.e. bands) and one band AMC subchannel is formed with at least one subcarrier from a band. The subcarriers of each band AMC channel are successive. Optimum subcarriers are selected for MSs according to their channel statuses, for band AMC subchannel allocation. Thus, transmission capacity can be increased.

The users for which band AMC subchannel allocation is not viable are allocated diversity subchannels. In the diversity mode, a diversity subchannel is formed with one or more subcarriers distributed across the total frequency band of the IEEE 802.16e communication system. The diversity mode brings a frequency diversity gain. Diversity subchannels are formed by mapping the indexes of the total subcarriers according to a predetermined frequency hopping pattern or spreading sequence.

In this context, the positions of the subcarriers of a diversity subchannel are not significant. Thus the BS can classify MSs to which diversity subchannels are allocated in one group.

The BS allocates band AMC subchannels to MSs which move relatively slow and thus which are placed in stable channel statuses in the time and frequency domains. These MSs can be grouped into one group.

As described above, the BS can group MSs according to service types, service data characteristics, and velocities of the MSs. While the BS considers each of these parameters (i.e. service type, service data characteristics, and velocity) alone in MS grouping in the above description, it can be further contemplated that the parameters are taken into account in combinations.

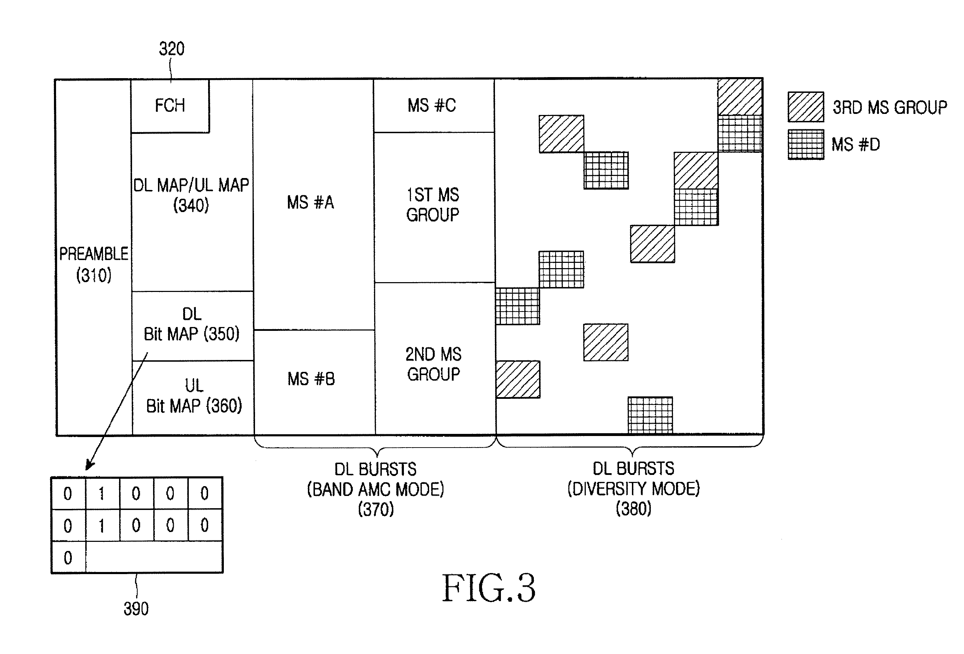

With reference to FIG. 3, a DL frame structure for an IEEE 802.16e communication system according to the present invention will be described.

Referring to FIG. 3, the DL frame starts with a preamble 310 followed by a Frame Control Header (FCH) 320, a MAP area including a DL MAP/UL MAP 340, a DL Bit MAP 350, a UL Bit MAP 360, DL bursts 370 of a band AMC mode, and DL bursts 380 of a diversity mode.

The preamble 310 is delivered for synchronization acquisition between a BS and MSs and BS identification. The FCH 320 specifies a modulation scheme used for the MAP area and the length of the MAP area. The FCH 320 is of a fixed length, for example, 24 bits long and transmitted using a predetermined MCS level, for example, a Quadrature Phase Shift Keying (QPSK) 1/16 level.

The DL MAP/UL MAP 340 is configured with information about regular MSs. For notational simplicity, MSs belonging to MS groups are called "group MSs" and MSs which belong to none of the MS groups are called "regular MSs". The DL MAP/UL MAP 340 indicates the presence or absence of DL bursts and UL bursts for regular MSs and, in the presence of DL bursts and UL bursts, describes the positions and modulation schemes of the DL bursts and the UL bursts. Since all regular MSs should listen to the DL MAP/UL MAP 340, the DL MAP/UL MAP 340 is modulated and coded at the most robust available MCS level in the IEEE 802.16e communication system.

The DL MAP/UL MAP 340 is configured for regular MSs to which normal subchannels (i.e. band AMC subchannels and diversity subchannels) are allocated, other than dedicated subchannels for MS groups in the present invention. In the case shown in FIG. 3, regular MSs having band AMC subchannels are MS #A, MS #B, and MS #C, and a regular MS having a diversity subchannel is MS #D.

The DL Bit MAP 350 carries a bitmap having bits, each bit indicating whether a DL dedicated subchannel allocated to an MS group corresponding to the bit are now available to the MSs of the MS group. The UL Bit MAP 360 carries a bitmap having bits, each bit indicating whether a UL dedicated subchannel allocated to an MS group corresponding to the bit are now available to the MSs of the MS group. Since all group MSs should listen to the DL Bit MAP 350 and the UL Bit MAP 360, the DL Bit MAP 350 and the UL Bit MAP 360 are transmitted using the most robust available MCS level in the IEEE 802.16e communication system.

The DL Bit MAP 350 and the UL Bit MAP 360 are created for group MSs to which DL dedicated subchannels and UL dedicated subchannels are allocated on an MS group basis. The dedicated subchannels are divided into dedicated band AMC subchannels generated in the band AMC mode and dedicated diversity subchannels generated in the diversity mode. As illustrated in FIG. 3, a first MS group and a second MS group are allocated DL dedicated band AMC subchannels and a third MS group is allocated a DL dedicated diversity subchannel. Allocation of UL dedicated subchannels is not specified herein. Given 11 MS groups to which dedicated subchannels are allocated, a bitmap 390 carried in the DL Bit MAP 350 has at least 11 bits to indicate whether DL dedicated subchannels for the 11 MS groups are available to the MSs of the respective 11 MS groups. If a bit corresponding to a specific MS group is 0, this implies that the MSs of the MS group are not allowed to use the DL dedicated subchannel of the MS group at a given time instant. If the bit is 1, this implies that the group MSs can use the DL dedicated subchannel at the given time instant.

It is determined during network entry to the BS when an MS is to be allocated a regular subchannel (i.e. a band Medium Access Control (MAC) subchannel or a diversity subchannel) or a dedicated subchannel (i.e. a dedicated band MAC subchannel or a dedicated diversity subchannel). The BS decides whether the MS is to be classified in an MS group, referring to the aforedescribed parameters during network entry. Depending on the decision, the BS also determines the type of subchannel to be allocated to the MS and notifies the MS of the subchannel type.

If the MS is not classified in any MS group, the BS allocates a regular subchannel to the MS, considering that the MS is a regular MS. If the MS is classified in an MS group, the BS allocates a dedicated subchannel preset for the MS group to the MS. The position of the dedicated subchannel is fixed irrespective of a dedicated band AMC subchannel or a dedicated diversity subchannel. Hence, the BS notifies the group MS of the position of the dedicated band AMC subchannel or the dedicated diversity subchannel.

In the case of a regular subchannel (i.e. a regular MS), the MS listens to the DL MAP/UL MAP 340 and finds out the position of a DL burst and a UL burst allocated to the MS. In the case of a dedicated subchannel (i.e. a group MS), the MS listens to the DL Bit MAP 350 and the UL Bit MAP 360 to thereby find out whether the dedicated subchannel is available to the MS. Needless to say, when the MS is allocated the dedicated subchannel, it has knowledge of the position of the dedicated subchannel.

The DL bursts 370 are for the band AMC mode, and the DL bursts 380 are for the diversity mode.

Dedicated subchannels can use a variable MCS level. The BS notifies each group MS of the MCS level during network entry or in the DL Bit MAP 350 and the UL Bit MAP 360.

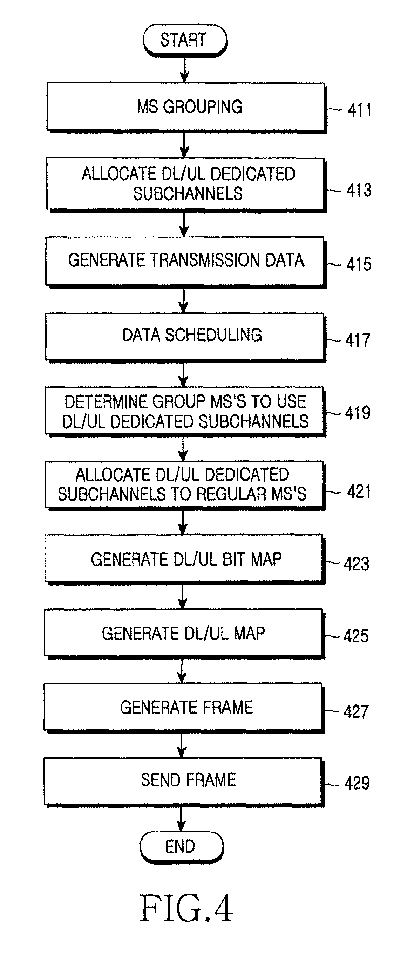

With reference to the flowchart of FIG. 4, a signal transmission operation of the BS in the IEEE 802.16e communication system according to an exemplary embodiment of the present invention will be described below.

Referring to FIG. 4, the BS groups MSs within its coverage area based on a plurality of parameters in step 411. During the grouping, there may exist MSs that belong to none of the MS groups. In step 413, the BS allocates a DL dedicated subchannel and a UL dedicated subchannel to each MS group. Upon generation of transmission data for MSs in step 415, the BS schedules the transmission data in step 417 and determines group MSs to use the DL dedicated subchannels and the UL dedicated subchannels allocated to their groups according to the scheduling in step 419. Each MS group is allocated a single DL dedicated subchannel and a single UL dedicated subchannel. Hence, data transmission/reception may occur for a plurality of group MSs belonging to the same group at the same time. In this case, the BS prioritizes the group MSs and allows a group MS with the highest priority level to use the DL dedicated subchannel and the UL dedicated subchannel. The prioritization is based on a plurality of parameters including fairness, the amount of data, and the like. The prioritization process is beyond the scope of the present invention and thus it will not be described in detail herein.

In step 421, the BS allocates DL subchannels and UL subchannels to regular MSs according to the scheduling result. The BS generates a DL Bit MAP and a UL Bit MAP which indicate the MS groups that will use their DL and UL dedicated subchannels in step 423 and a DL MAP and a UL MAP that provide information about the DL and UL subchannels allocated to the regular MSs in step 425. In step 427, the BS forms a frame with the DL Bit MAP, the UL Bit MAP, the DL MAP, the UL MAP, a preamble, an FCH, and the data according to the frame structure for the IEEE 802.16e communication system. The BS sends the frame to the MSs in step 429 and ends the procedure.

While not depicted separately in FIG. 4, it is obvious that the BS can receive additional data at a later time from group MSs on the UL dedicated subchannels allocated to the groups of the group MSs.

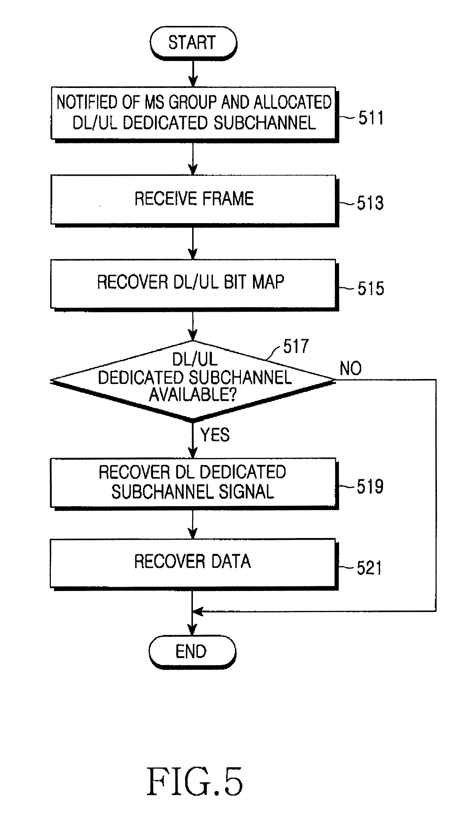

With reference to the flowchart of FIG. 5, a signal reception operation of a group MS in the IEEE 802.16e communication system according to the present invention will be described. A regular MS receives signals in the same manner as in the typical IEEE 802.16e communication system. Thus, the following description is made of signal reception in the group MS.

Referring to FIG. 5, the group MS is notified of an MS group to which it belongs and DL and UL dedicated subchannels allocated to the MS group during network entry to the BS in step 511. The group MS receives a frame from the BS in step 513 and recovers a DL Bit MAP and a UL Bit MAP from the frame in step 515. In step 517, the group MS determines whether the DL and UL dedicated subchannels are available to the group MS by reading the values of bits mapped to the MS group in the DL and UL Bit MAPs. If the bit values are 0s, the group MS considers that the DL and UL dedicated subchannels are unavailable. If the bit values are 1s, the group MS considers that the DL and UL dedicated subchannels are available.

If the DL and UL dedicated subchannels are available, the group MS recovers a DL dedicated subchannel signal at a pre-notified position of the DL dedicated subchannel signal of the MS group in step 519 and recovers data from the DL dedicated subchannel signal in step 521.

While not depicted separately in FIG. 5, the group MS can use the UL dedicated subchannel of the MS group. Thus, upon generation of transmission data to be sent to the BS, the group MS can send the data on the UL dedicated subchannel.

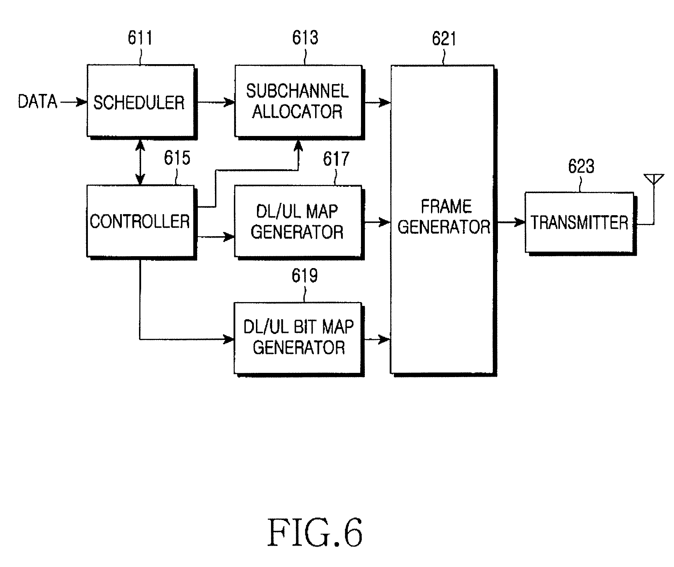

With reference to the block diagram of FIG. 6, the structure of the BS in the IEEE 802.16e communication system will be described.

Referring to FIG. 6, the BS includes a scheduler 611, a subchannel allocator 613, a controller 615, a DL/UL MAP generator 617, a DL/UL Bit MAP generator 619, a frame generator 621, and a transmitter 623.

The controller 615 groups MSs within the coverage area of the BS based on a plurality of parameters. During the grouping, there may exist MSs that belong to none of the MS groups. The controller 615 determines DL and UL dedicated subchannels for the MS groups. Upon generation of transmission data for MSs, the controller 615 controls the scheduler 611 to schedule the transmission data. Since each MS group is allocated a single DL dedicated subchannel and a single UL dedicated subchannel, data transmission/reception may occur for a plurality of group MSs belonging to the same group at the same time. In this case, the scheduler 611 prioritizes the group MSs and schedules a group MS with the highest priority level to use the DL dedicated subchannel and the UL dedicated subchannel. The scheduler 611 provides the scheduling results to the subchannel allocator 613 and the controller 615.

The controller 615 determines group MSs to use the DL and UL dedicated subchannels of the groups to which they belong according to the scheduling result. Also, the controller 615 determines DL and UL subchannels to the regular MSs according to the scheduling result. The controller 615 outputs information about the DL and UL subchannels for the regular MSs to the DL/UL MAP generator 617 and information about the DL and UL dedicated subchannels for the group MSs to the DL/UL Bit MAP generator 619. Also, the controller 615 controls the subchannel allocator 613 to allocate subchannels to the data based on the information.

After allocating the subchannels in accordance with the scheduled data received from the scheduler 611 and the information received form the controller 615, the subchannel allocator 613 outputs the subchannel signals to the frame generator 621.

The DL/UL MAP generator 617 generates a DL MAP and a UL MAP according to the DL and UL subchannel allocation information for the regular MSs and outputs the same to the frame generator 621. The DL/UL Bit MAP generator 619 generates a DL Bit MAP and a UL Bit MAP according to the dedicated DL and UL subchannel allocation information for the group MSs and outputs the same to the frame generator 621.

The frame generator 621 generates a frame with the subchannel signals, the DL MAP, the UL MAP, the DL Bit MAP, the UL Bit MAP, a preamble (not shown), and an FCH (not shown), and outputs the same to the transmitter 623. The transmitter 623 sends the frame through an antenna after processing.

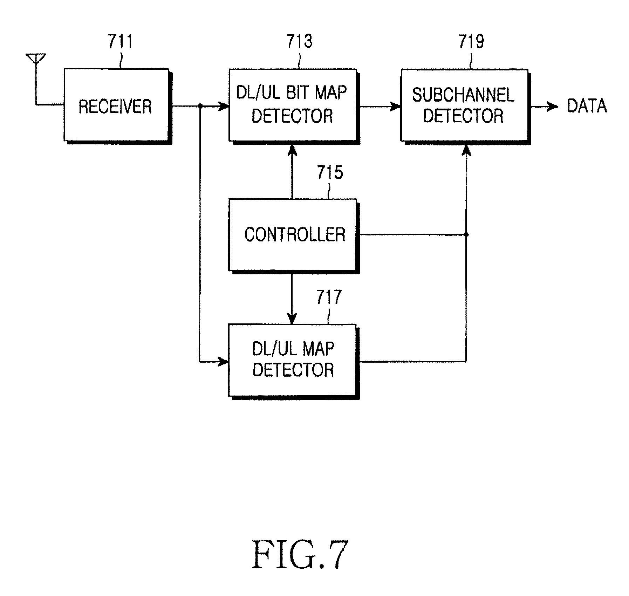

With reference to the block diagram of FIG. 7, the structure of the MS in the IEEE 802.16e communication system according to the present invention will be described below.

Referring to FIG. 7, the MS includes a receiver 711, a DL/UL Bit MAP detector 713, a controller 715, a DL/UL MAP detector 713, and a subchannel detector 719.

Upon receipt of a signal through an antenna, the receiver 711 detects a frame from the received signal and provides a DL MAP and a UL MAP to the DL/UL MAP detector 717 and a DL Bit MAP and a UL Bit MAP to the DL/UL Bit MAP detector 713.

The controller 715 already knows whether the MS is a regular MS or a group MS during network entry. Therefore, in the case of a regular MS, the controller 715 controls the DL/UL MAP detector 717 to recover the DL MAP and the UL MAP, while deactivating the DL/UL Bit MAP detector 713 from recovering the DL Bit MAP and the UL Bit MAP. In the case of a group MS, the controller 715 controls the DL/UL Bit MAP detector 713 to recover the DL Bit MAP and the UL Bit MAP, while deactivating the DL/UL MAP detector 717 from recovering the DL MAP and the UL MAP.

The subchannel detector 719 detects subchannel signals in accordance with the recovered DL MAP and UL MAP or the recovered DL Bit MAP and UL Bit MAP and recovers data from the subchannel signals.

As is apparent from the above description, the present invention enables signal transmission and reception on an MS group basis by allocating dedicated subchannels to each MS group in a communication system. Therefore, DL resource consumption caused by the overhead of a DL MAP and a UL MAP is minimized and thus DL resource efficiency is increased.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. A signal transmission method of a Base Station (BS) in a communication system, comprising:
grouping Mobile Stations (MSs) serviced by the BS into MS groups; and
allocating a DownLink (DL) dedicated channel and an UpLink (UL) dedicated channel to each of the MS groups.

2. The signal transmission method of claim 1, further comprising:
scheduling transmission data, upon generation of the transmission data after allocating the DL and UL dedicated channels to the each MS group; and
determining MSs to use DL and UL dedicated channels allocated to MS groups to which the MSs belong according to the result of the scheduling.

3. The signal transmission method of claim 2, further comprising:
generating information indicating that the DL and UL dedicated channels are available to the determined MSs, after determining the MSs to use the DL and UL dedicated channels; and
transmitting the information to the MSs.

4. The signal transmission method of claim 3, wherein the information is a DL Bit MAP and a UL Bit MAP, each having as many bits as the number of the MSs, and each of the bits being mapped to the MSs on a one-to-one basis and indicating that a DL dedicated channel is available to an MS mapped to the each bit when the each bit is in the DL Bit MAP, and indicating that a UL dedicated channel is available to an MS mapped to the each bit when the each bit is in the UL Bit MAP, if the each bit is set to a predetermined value.

5. The signal transmission method of claim 1, wherein grouping MSs served by the BS into MS groups comprises grouping the MSs according to at least one of service qualities of services that the MSs receive, data characteristics of the services, and velocities of the MSs.

6. The signal transmission method of claim 1, further comprising transmitting information about DL and UL dedicated channels allocated to each MS group to the MSs.

7. The signal transmission method of claim 6, wherein the information includes at least one of the positions of the DL and UL dedicated channels allocated to each MS group and a Modulation and Coding Scheme (MCS) level to be used for the DL and UL dedicated channels allocated to the each MS group.

8. A signal reception method of a Mobile Station (MS) in a communication system, comprising:
receiving from a Base Station (BS) first information about an MS group to which the MS belongs and DownLink (DL) and UpLink (UL) dedicated channels allocated to the MS group; and
receiving a signal from the BS and detecting second information indicating whether the DL and UL dedicated channels are available to the MS from the received signal.

9. The signal reception method of claim 8, wherein the second information is a DL Bit MAP and a UL Bit MAP, each having bits mapped to MSs on a one-to-one basis and each of the bits indicating that a DL dedicated channel allocated to the MS group of an MS mapped to the each bit is available to the MS when the each bit is in the DL Bit MAP, and indicating that a UL dedicated channel allocated to the MS group of an MS mapped to the each bit is available to the MS when the each bit is in the UL Bit MAP, if the each bit is set to a predetermined value.

10. The signal reception method of claim 9, wherein the first information includes at least one of the positions of the DL and UL dedicated channels and a Modulation and Coding Scheme (MCS) level to be used for the DL and UL dedicated channels.

11. The signal reception method of claim 10, further comprising detecting DL and UL dedicated channel signals at the positions of the DL and UL dedicated channels, if the second information indicates that the DL and UL dedicated channels are available to the MS and the first information includes the positions of the DL and UL dedicated channels.

12. The signal reception method of claim 8, wherein the MS group is generated according to at least one of service qualities of services that MSs serviced by the BS receive, data characteristics of the services, and velocities of the MSs.

13. A Base Station (BS) for transmitting a signal in a communication system, comprising:
a controller for grouping Mobile Stations (MSs) serviced by the BS into MS groups and determining DownLink (DL) and UpLink (UL) dedicated channels to be allocated to each of the MS groups; and
a channel allocator for allocating the DL and UL dedicated channels under the control of the controller.

14. The BS of claim 13, further comprising a scheduler for scheduling data to be sent to the MSs.

15. The BS of claim 14, wherein the controller determines MSs to use DL and UL dedicated channels allocated to MS groups to which the MSs belong according to the result of the scheduling and generates information indicating that the DL and UL dedicated channels are available to the determined MSs.

16. The BS of claim 15, further comprising a transmitter for transmitting DL dedicated channel signals and the information to the MSs.

17. The BS of claim 16, wherein the information is a DL Bit MAP and a UL Bit MAP, each having as many bits as the number of the MSs, and each of the bits being mapped to the MSs on a one-to-one basis and indicating that a DL dedicated channel is available to an MS mapped to the each bit when the each bit is in the DL Bit MAP, and indicating that a UL dedicated channel is available to an MS mapped to the each bit when the each bit is in the UL Bit MAP, if the each bit is set to a predetermined value.

18. The BS of claim 13, wherein the controller groups the MSs according to at least one of service qualities of services that the MSs receive, data characteristics of the services, and velocities of the MSs.

19. The BS of claim 16, wherein the controller controls the transmitter to transmit information about the DL and UL dedicated channels allocated to the each MS group to the MSs.

20. The BS of claim 19, wherein the information includes at least one of the positions of the DL and UL dedicated channels allocated to the each MS group and a Modulation and Coding Scheme (MCS) level to be used for the DL and UL dedicated channels allocated to the each MS group.

21. A Mobile Station (MS) for receiving a signal in a communication system, comprising:
a receiver for receiving a signal from a Base Station (BS) and detecting first information about an MS group to which the MS belongs and DownLink (DL) and UpLink (UL) dedicated channels allocated to the MS group;
a detector for detecting second information indicating whether the DL and UL dedicated channels are available to the MS from the received signal under a predetermined control; and
a channel detector for detecting DL and UL dedicated channel signal from the DL and UL dedicated channels under a predetermined control.

22. The MS of claim 21, wherein the second information is a DL Bit MAP and a UL Bit MAP, each having bits mapped to MSs on a one-to-one basis and each of the bits indicating that a DL dedicated channel allocated to the MS group of an MS mapped to the each bit is available to the MS when the each bit is in the DL Bit MAP, and indicating that a UL dedicated channel allocated to the MS group of an MS mapped to the each bit is available to the MS when the each bit is in the UL Bit MAP, if the each bit is set to a predetermined value.

23. The MS of claim 22, wherein the first information includes at least one of the positions of the DL and UL dedicated channels and a Modulation and Coding Scheme (MCS) level to be used for the DL and UL dedicated channels.

24. The MS of claim 23, wherein if the second information indicates that the DL and UL dedicated channels are available to the MS and the first information includes the positions of the DL and UL dedicated channels, the channel detector detects the DL and UL dedicated channel signals at the positions of the DL and UL dedicated channels.

25. The MS of claim 21, wherein the MS group is generated according to at least one of service qualities of services that MSs serviced by the BS receive, data characteristics of the services, and velocities of the MSs.
